# EUROPEAN PATENT SPECIFICATION

(11) **EP 2 682 221 B1**
(45) Date of publication and mention of the grant of the patent: **30.12.2015**
(21) Application number: 12752792.7
(22) Date of filing: 28.02.2012
(51) Int. Cl.: B23K 35/363, B23K 35/02, B23K 35/26, B23K 35/362, B23K 35/36

(54) **FLUX**
FLUSSMITTEL
FLUX

(30) Priority: 02.03.2011 JP 2011045778
(43) Date of publication of application: 08.01.2014
(73) Proprietor: Senju Metal Industry Co., Ltd, Tokyo 120-8555 (JP)
(72) Inventor: OKADA Sakie, Tokyo 120-8555 (JP); KOROKI Motoki, Tokyo 120-8555 (JP); ISEKI Hiroaki, Tokyo 120-8555 (JP); ITOYAMA Taro, Tokyo 120-8555 (JP)
(74) Representative: D Young & Co LLP
(86) International application number: PCT/JP2012/054931
(87) International publication number: WO 2012/118077

(56) References cited:
- JP-A- 2 290 693
- JP-A- 2 290 693
- JP-A- 5 228 689
- JP-A- 5 228 689
- JP-A- 61 086 092
- JP-A- H07 501 985
- JP-A- 2008 110 370
- JP-A- 2008 110 370
- US-A- 4 615 479
- US-A1- 2004 185 259

## Description

### [TECHNICAL FIELD]

The present invention relates to flux which is mixed with solder powder to produce solder paste and it more specifically, relates to the flux which can prevent viscosity in the solder paste from varying.

### [BACKGROUND]

The flux used for soldering generally has an efficacy such that metallic oxides on the solder and a metallic surface of the subject to be soldered are chemically removed and metallic elements can be shifted across a boundary of both. By using the flux, any intermetallic compounds can be formed between the solder and the metallic surface of the subject to be soldered so that they can be strongly connected.

The solder paste is a composite material that is formed by mixing the solder powder and the flux. The solder paste is applied to a portion, electrodes, terminals and the like, to be soldered of a board such as a printed circuit board by a printing method or a discharge method. Any components are mounted on the soldered portion thereof to which the solder paste is applied. The soldering is performed so that the board is heated in a heating furnace called as "reflow furnace" to fuse the solder.

Any viscosity improver called as thixotropic agent is added to the flux used in the solder paste and it is designed to suppress sedimentation of the solder powder in the flux. In the past, hardened castor oil has been added as the thixotropic agent. Flux in which stearic acid amide has been added has been proposed (For example, see Patent Document 1).

Patent Document 1: Japanese Patent Application Publication No. 2004-25305

JP2008110370 flux composition and a cream solder capable of forming a flux residual films having excellent insulation properties without causing any cracking thereon after soldering even under the environment of extremes of temperature difference comprising methacrylic acid alkylesters respectively aetylic resin in 5 to 40 parts by weight.

### [SUMMARY OF THE INVENTION]

### [PROBLEMS TO BE SOLVED BY THE INVENTION]

Sedimentation of the solder powder in the flux of the solder paste in which the flux and the solder powder are mixed is because specific gravity of the solder powder is about 7.4 in relation to that the specific gravity of the flux is set to be one and their specific gravities are substantially different from each other.

Accordingly, in order to suppress sedimentation of the solder powder which have difference of specific gravity from that of the flux, any precipitate having a network structure has been formed in the flux. It has been the past thixotropic agent to allow the precipitate having such a network structure to be formed. Such a network structure has caused elasticity to be enhanced in the solder paste.

The solder paste is printed and applied to the board or the like by using a metal screen which is provided with openings each corresponding to a position and a size of an electrode or the like on the board. The solder paste is printed and applied thereto so that the solder paste is put on the metal screen and a scraping implement called as squeegee is slid on the metal screen using power of driving source such as a motor.

When sliding the squeegee on the metal screen, the solder paste is transferred and entered to the openings of the metal screen with it being rotated by the squeegee. When the metal screen is then removed, the solder paste filled in the openings is transferred on the board. Accordingly, the solder paste is put on a state where it is always stirred during a period of printing and applying time of the solder paste.

When the solder paste having the elasticity by adding the thixotropic agent is stirred, a part of the network structure in the flux is destroyed, which causes viscosity thereof to be dropped in a course of the printing. When stirring the solder paste, any chemical reaction is accelerated between the flux and the solder powder. Such a chemical reaction causes the elasticity thereof to be artificially increased so that the viscosity of the solder paste significantly varies.

The past-used thixotropic agent contains hardened castor oil or lubricant of amide type. In the solder paste in which the flux to which it is added and the solder powder are mixed, the elasticity of the solder paste is enhanced so that an effect of suppressing sedimentation of solder powder is obtained and an effect of maintaining a shape of the solder paste when applying it is also obtained.

On the other hand, based on the quality of the thixotropic agent to be added, in addition to the effect of suppressing sedimentation of solder powder, an action may also arise such that the viscosity of the solder paste varies, the printing and applying quality based on the fact that the viscosity thereof drops down when stirring the solder paste is changed and a spread thereof when heating it is changed.

Accordingly, although, taking into consideration these features, it is necessary to adjust mixture of the thixotropic agent so that sedimentation of the solder powder can be suppressed and the viscosity of the solder paste can be prevented from varying, there has been no flux having both the effects of suppressing sedimentation of the solder powder and preventing the viscosity of the solder paste from varying.

The present invention has an object to provide flux which is mixed with the solder powder to produce the solder paste, the viscosity of which is prevented from varying.

### [MEANS FOR SOLVING THE PROBLEMS]

Inventors have paid attention to a polymer having a special quality for improving fluidity and have found out a component that does not hinder the effect of suppressing sedimentation of the solder powder by adding the thixotropic agent and controls viscosity lowering.

This invention relates to flux which is mixed with solder powder to produce the solder paste, the flux containing an amount of methacrylate polymer which reduces a thixotropic index of the solder paste and enhances viscosity thereof.

As the methacrylate polymer, polyalkyl methacrylate having an alkyl group is preferable and it is preferable that an addition amount of polyalkyl methacrylate is 0.5-5.0 % thereof. It is to be noted that % is mass% unless otherwise specified. Further, as the thixotropic agent, hardened castor oil is preferably added.

### [EFFECTS OF THE INVENTION]

According to the flux of the present invention, when it is mixed with the solder powder to produce the solder paste, by adding the methacrylate polymer, it is possible to enhance the viscosity of the solder paste. Accordingly, it is possible to prevent the printing and applying efficiency from varying based on the viscosity lowering when stirring the solder paste. An alloy composition of the solder powder to be mixed is not specifically limited.

The spread of the solder paste when heating it is also controllable and a spread of a residue of the flux is further controllable.

### [BRIEF DESCRIPTION OF THE DRAWINGS]

[Figure 1] is a graph showing a relationship between an addition amount of polyalkyl methacrylate and viscosity of the solder paste as well as a thixotropic index thereof.
[Figure 2] is a graph showing a relationship between a shear rate and stress in relation to an addition amount of polyalkyl methacrylate.
[Figure 3] is a graph showing a relationship between a shear rate and stress in relation to an addition amount of thixotropic agent.
[Figure 4] is a graph showing a relationship between an addition amount of polyalkyl methacrylate and adhesive force.
[Figure 5A] is a photomicrograph showing a variation of a printed shape of the solder paste in which the flux according to an embodiment to which the polyalkyl methacrylate is added is mixed.
[Figure 5B] is a photomicrograph showing a variation of a printed shape of the solder paste in which the flux according to an embodiment to which the polyalkyl methacrylate is added is mixed.
[Figure 6A] is a photomicrograph showing a variation of a printed shape of the solder paste in which the flux according to a comparison example to which the polyalkyl methacrylate is not added is mixed.
[Figure 6B] is a photomicrograph showing a variation of a printed shape of the solder paste in which the flux according to the comparison example to which the polyalkyl methacrylate is not added is mixed.
[Figure 7] is a photomicrograph showing a residue of flux in the solder paste in which the flux according to an embodiment to which the polyalkyl methacrylate is added is mixed.
[Figure 8] is a photomicrograph showing a residue of flux in the solder paste in which the flux according to a comparison example to which the polyalkyl methacrylate is not added is mixed.
[Figure 9] is a photomicrograph showing a printing condition before the solder paste is heated.
[Figure 10] is a photomicrograph showing a spread of the solder paste, after it is heated, in which the flux according to an embodiment to which the polyalkyl methacrylate is added is mixed.
[Figure 11] is a photomicrograph showing a spread of the solder paste, after it is heated, in which the flux according to the embodiment to which the polyalkyl methacrylate is added is mixed.
[Figure 12] is a photomicrograph showing a spread of the solder paste, after it is heated, in which the flux according to the embodiment to which the polyalkyl methacrylate is added is mixed.
[Figure 13] is a photomicrograph showing a spread of the solder paste, after it is heated, in which the flux according to a comparison example to which the polyalkyl methacrylate is not added is mixed.

### [EMBODIMENTS FOR CARRYING OUT THE INVENTION]

The flux according to these embodiments is mixed with the solder powder to produce a solder paste. The flux according to these embodiments contains hardened castor oil as thixotropic agent to suppress sedimentation of the solder powder. In order to enhance the viscosity of the solder paste without blocking any effect of suppressing sedimentation of the solder powder by this hardened castor oil, the flux according to these embodiments contains methacrylate polymer. As the methacrylate polymer, polyalkyl methacrylate having an alkyl group is preferable.

In the solder paste in which the flux to which polyalkyl methacrylate is added and the solder powder are mixed, the viscosity of the solder paste can be enhanced. Further, the addition of the hardened castor oil suppresses sedimentation of the solder powder so that the solder powder and the flux are inhibited from being separated. The addition of polyalkyl methacrylate to the flux does not block any effect of suppressing sedimentation of the solder powder by the addition of the hardened castor oil.

The viscosity of the solder paste varies on the basis of an addition amount of the polyalkyl methacrylate to the flux. When increasing the addition amount of polyalkyl methacrylate, the viscosity of the solder paste is enhanced. On the other hand, there is an addition amount of polyalkyl methacrylate which decreases a rate of enhancement of the viscosity of the solder paste.

Elasticity of the solder paste varies on the basis of an addition amount of the polyalkyl methacrylate to the flux. When increasing the addition amount of polyalkyl methacrylate, the elasticity of the solder paste is decreased. On the other hand, there is an addition amount of polyalkyl methacrylate which decreases a rate of decrease of the elasticity of the solder paste.

Accordingly, it is preferable that an addition amount of polyalkyl methacrylate is not less than 0.5% thereof and not more than 5.0 % thereof.

### < Embodiments>

The flux of the embodiments and that of a comparison example, according to compositions shown in the following Table 1, were prepared. Such flux and the solder powder (Composition: Sn-3Ag-0.5Cu, particle size: 25-36 µm) were mixed to produce the solder paste so that the amount of the flux contained therein was 11 mass%.

**[Table 1]**

| | EMBODIMENT 1 | EMBODIMENT 2 | EMBODIMENT 3 | EMBODIMENT 4 | COMPARISON EXAMPLE 1 |
|---|---|---|---|---|---|
| MODIFIED ROSIN | 48% | 48% | 45% | 38% | 48% |
| DIETHYLENE GLYCOL MONOHEXYL ETHER | 44% | 43.5% | 42.5% | 44.5% | 44.5% |
| DIPHENYLGUANIDINE HYDROBROMIDE | 1.5% | 1.5% | 1.5% | 1.5% | 1.5% |
| HARDENED CASTOR OIL | 6% | 6% | 6% | 6% | 6% |
| POLYALKYL METHACRYLATE | 0.5% | 1% | 5% | 10% | 0% |

Here, in the compositions shown in Table 1, the modified rosin and diethylene glycol monohexyl ether (2-(2-Hexyloxyethoxy) ethanol) as a solvent are of a principal ingredient and diphenyl guanidine hydrobromide is added thereto as an activator. In each embodiment, hardened castor oil is added as a thickener (thixotropic agent) and polyalkyl methacrylate is also added as the thickener. In a comparison example, polyalkyl methacrylate is not added.

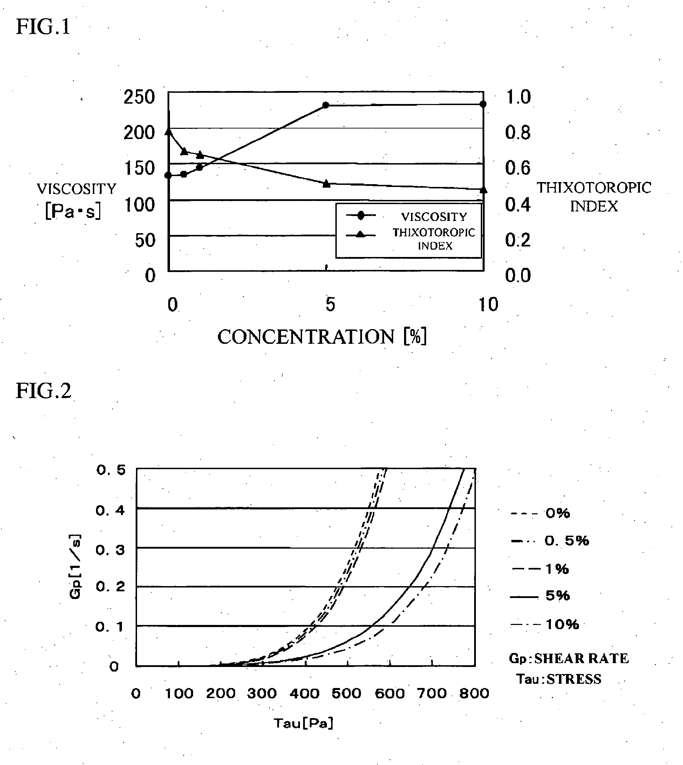

FIG. 1 is a graph showing a relationship between an addition amount of polyalkyl methacrylate and viscosity of the solder paste as well as a thixotropic index thereof. In FIG. 1, a result is shown in which the viscosity and the thixotropic index of each of the solder pastes produced using the flux of the embodiments and that of the comparison example are measured by a viscometer of double cylinder type.

A shown in FIG. 1, when an amount of the polyalkyl methacrylate is to be added to the flux is increased, the thixotropic index is decreased and the viscosity is increased. The thixotropic index indicates a degree of the viscosity lowering rate in comparison with a share rate when a value thereof is increased. The thixotropic index is a parameter of elasticity. As shown in FIG. 1, it is understood that the solder paste of the embodiment 1 in which 0.5 mass% of polyalkyl methacrylate is added to the flux is decreased in the elasticity thereof in comparison with the solder paste of the comparison example 1 in which no polyalkyl methacrylate is added to the flux.

Accordingly, it is understood that the addition of the polyalkyl methacrylate to the flux allows having an effect such that the elasticity of the solder paste is decreased and the viscosity thereof is enhanced. Here, in the solder paste of the embodiment 3 in which 5 mass% of polyalkyl methacrylate is added to the flux and that of the embodiment 4 in which 10 mass% of polyalkyl methacrylate is added to the flux, degree of variation in the viscosity and elasticity thereof is smaller so that it is understood that an effect such that the elasticity thereof is decreased and the viscosity thereof is enhanced is not substantially changed.

FIG. 2 is a graph showing a relationship between a shear rate and stress in relation to an addition amount of polyalkyl methacrylate. FIG. 2 shows curves of the shear rate and the stress based on a result of measuring the shear rate and the stress of each of the solder pastes produced using the flux of the embodiments and that of the comparison example shown in Table 1 by a cone-plate type viscometer.

Any of the solder pastes of each of the embodiments and the comparison example have a yield stress at about 150 Pa and they have a tendency in which the shear rate is increased with the stress being increased starting from here. On the other hand, in the solder pastes up to the embodiment 2 in which the addition amount of polyalkyl methacrylate is 1 mass%, there is less variation between the curves of the shear rate and the stress of the embodiment 1 and the comparison example 1.

Whereas, it is understood that in the solder paste of the embodiment 3 in which the addition amount of polyalkyl methacrylate is 5 mass%, an inclination of the curve of the shear rate and the stress is reduced and a degree of an increase of the shear rate in relation to the stress relaxes. It is shown that this allows the viscosity of the solder paste to be enhanced without changing any yield stress thereof.

Here, between the embodiment 3 in which the addition amount of polyalkyl methacrylate is 5 mass% and the embodiment 4 in which the addition amount ofpolyalkyl methacrylate is 10 mass%, there is less variation in the curves of the shear rate and the stress, so that it is understood that any effect of enhancing the viscosity thereof is not substantially changed.

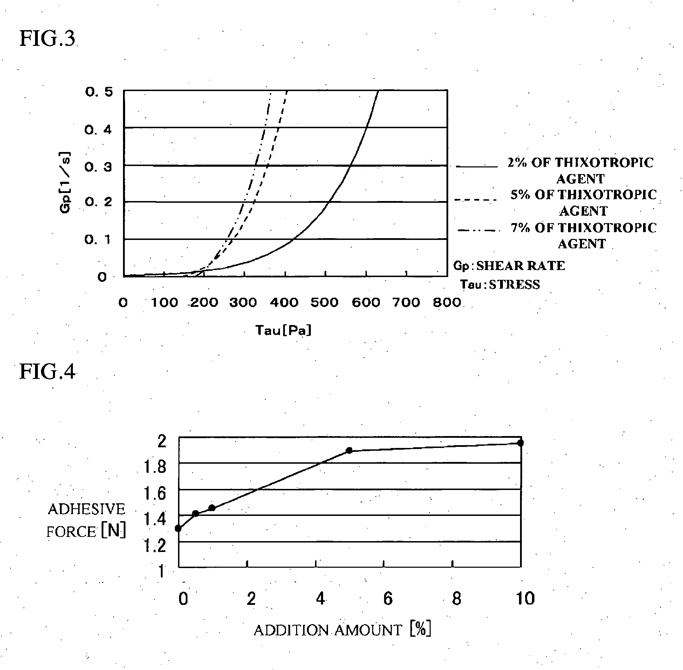

FIG. 3 is a graph showing a relationship between a shear rate and stress in relation to an addition amount of thixotropic agent. FIG. 3 shows, as a comparison example, curves of the shear rate and the stress based on a result of measuring, by a cone-plate type viscometer, the shear rate and the stress of each of the solder pastes produced using the flux in which addition amounts of hardened castor oil as thixotropic agent are changed without adding any polyalkyl methacrylate.

As shown in FIG. 3, in a case of the solder paste in which there is a small amount of the thixotropic agent to be added in the flux, the yield stress is reduced and the viscosity is enhanced. On the other hand, in a case thereof in which there is a large amount of the thixotropic agent, a tendency such that the yield stress is increased and the viscosity is decreased is shown. Thus, it is understood that in a case where only the thixotropic agent is added, a high yield stress and a high viscosity are not obtained at the same time. As shown in the embodiments of FIGS. 1 and 2, it is understood that addition of the polyalkyl methacrylate and the thixotropic agent allows the viscosity thereof to be enhanced with maintaining the yield stress.

FIG. 4 is a graph showing a relationship between an addition amount of polyalkyl methacrylate and adhesive force. As shown in FIG. 4, when increasing an addition amount of polyalkyl methacrylate, the adhesive force of the solder paste is increased. In the embodiment 1 in which the addition amount of polyalkyl methacrylate to the flux is 0.5 mass%, it is understood that the adhesive force of the solder paste is increased in comparison with the comparison example 1 in which no polyalkyl methacrylate is added.

In the solder paste of the embodiment 3 in which the addition amount of polyalkyl methacrylate is 5 mass%, it is understood that about twofold adhesive force of the solder paste is obtained in comparison with the solder paste of the comparison example. Here, between the embodiment 3 in which the addition amount of polyalkyl methacrylate is 5 mass% and the embodiment 4 in which the addition amount of polyalkyl methacrylate is 10 mass%, it is understood that there is no substantial variation in the adhesive force.

Based on the above results, since the solder paste in which the addition amount of polyalkyl methacrylate to the flux is 0.5 mass% can be decreased in the elasticity thereof, it is understood that an effect of enhancing the viscosity thereof can be obtained.

It is also understood that in the solder paste in which the addition amount of polyalkyl methacrylate is 5 mass%, the effect of further enhancing the viscosity thereof can be obtained. Additionally, between the solder paste in which the addition amount of polyalkyl methacrylate is 5 mass% and the solder paste in which the addition amount of polyalkyl methacrylate is 10 mass%, it is understood that there is no substantial difference in the effect of enhancing the viscosity thereof.

Accordingly, in order to enhance the viscosity of the solder paste without blocking an effect of suppressing sedimentation of the solder powder by addition of the thixotropic agent, it is understood that an amount of the thixotropic agent which can obtain an effect of suppressing sedimentation of the solder powder is preferably added to the flux and, at the same time, the polyalkyl methacrylate of not less than 0.5 mass% through not more than 10 mass%, preferably, not less than 0.5 mass% through not more than 5 mass%, is preferably added to the flux. Particularly, it is understood that the solder paste using the flux to which 6% of the hardened castor oil and 5% of the polyalkyl methacrylate are added can enhance the viscosity of the solder paste with maintaining the elasticity thereof.

As described above, adding the polyalkyl methacrylate to the flux in addition to the thixotropic agent enables the solder paste to have any excellent adhesive force so that after the solder paste is printed and applied on the board, retention of components when they are mounted is augmented. This allows to be expected an effect of preventing a mounting difference of the components and missing them.

Further, as general steps of printing and applying the same, a double squeegee system is used. When the printing using one squeegee finishes, this one squeegee is lifted and at the same time, the solder paste is separated from the one squeegee by its weight and drops to a screen. Next, using the other squeegee, the printing is continued.

As a behavior of the solder paste while the squeegees are switched, it is required to peel off and fall the solder paste from the squeegee when lifting the squeegee after the printing, but in the solder paste using the past flux, the solder paste may be stuck to the squeegee so as to fail in dropping. This occurs in a case where the elasticity of solder paste is strong and the viscosity thereof is low so that enhancing the viscosity of the solder paste enables to be expected an effect of being able to enhance stability in the printing of an automatic printer.

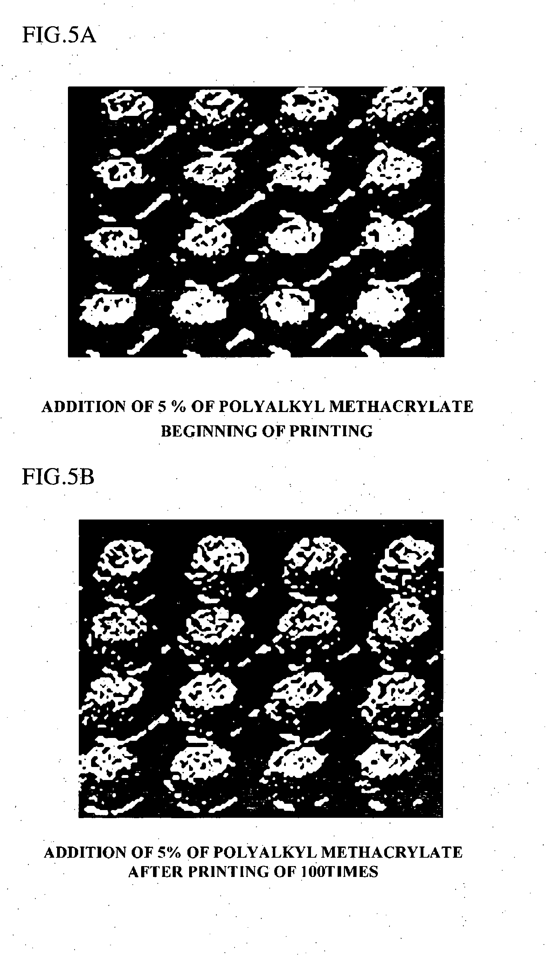

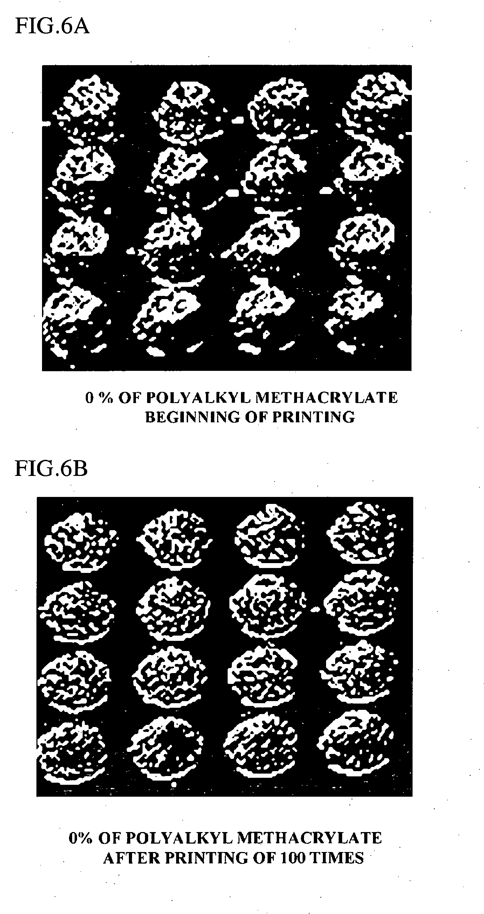

FIGS. 5A and 5B are photomicrographs each showing a variation of a printed shape of the solder paste according to the embodiment in which the polyalkyl methacrylate is added to the flux. FIG. 5A shows the shape of the solder paste at a beginning of printing and FIG. 5B shows the shape of the solder paste after printing of 100 times. FIGS. 6A and 6B are photomicrographs each showing a variation of a printed shape of the solder paste according to the comparison example in which no polyalkyl methacrylate is added to the flux. FIG. 6A shows the shape of the solder paste at a beginning of printing and FIG. 6B shows the shape of the solder paste after printing of 100 times.

Regarding printing quality of the solder paste, in the solder paste using the past flux to which no polyalkyl methacrylate is added, the metal screen may be clogged with the solder paste at its openings when the successive printing is continuously carried out. As shown in FIG. 6B, the solder paste corresponding to volume of the opening cannot be transferred onto the board. Such a clogging phenomenon frequently occurs in the solder paste having high elasticity and low viscosity.

Thus, when adding 5 mass% of polyalkyl methacrylate to the flux to enhance the viscosity of the solder paste, as shown in FIGS. 5A and 5B, there is less variation in the printed shape thereof even at the beginning of the printing or after the printing of 100 times so that an amount of printing was stable.

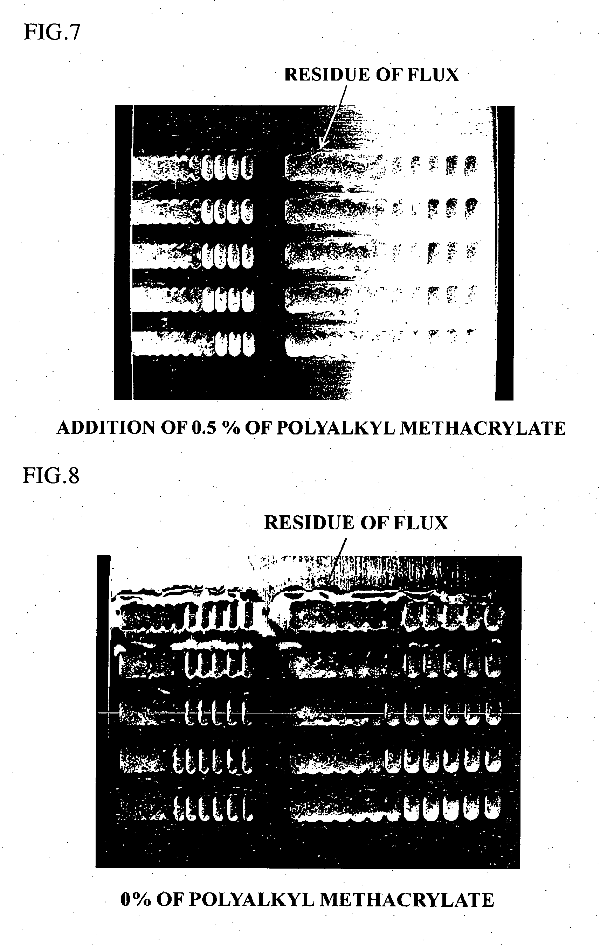

FIG. 7 is a photomicrograph showing a residue of flux in the solder paste in which the polyalkyl methacrylate is added to the flux according to the embodiment. FIG. 8 is a photomicrograph showing a residue of flux in the solder paste in which no polyalkyl methacrylate is added to the flux according to a comparison example.

After the solder paste is dissolved in a reflow furnace, the flux spreads over the periphery of an area to be soldered and remains to be as a residue. In the solder paste using the past flux to which no polyalkyl methacrylate is added, as shown in FIG. 8, the residue of flux which has spread over the periphery of the area to be soldered is concentrated and remains behind so that the residue of flux is seen so as to be a large amount thereof to an extreme. On such a situation, it may be determined that the result or the external appearance of the soldered area is inferior.

On the other hand, in the solder paste using the flux according to the embodiment to which 0.5 mass% of the polyalkyl methacrylate is added, as shown in FIG. 7, the residue thereof after the reflow thinly spreads over so that the residue of flux is seen so as to be a small amount thereof.

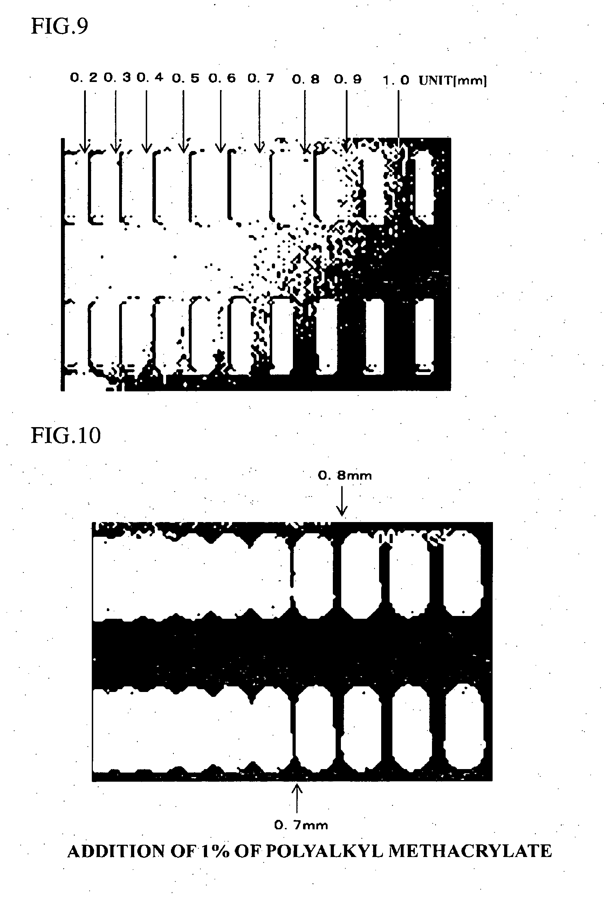

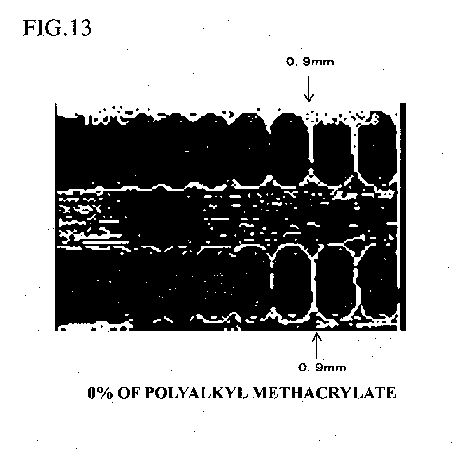

FIG. 9 is a photomicrograph showing a printing condition before the solder paste is heated. FIGS. 10 through 12 are photomicrographs each showing a spread of the solder paste, after it is heated, in which the polyalkyl methacrylate is added to the flux according to each of the embodiments. FIG. 13 is a photomicrograph showing a spread of the solder paste, after it is heated, in which no polyalkyl methacrylate is added to the flux according to the comparison example.

In order to test slump performance indicating the spread of the solder paste when heating it, the solder paste was printed on a board with gaps shown in FIG. 9. This board was heated at 100 degrees Celsius and the minimum gap in which any bridging did not occur was extracted.

In the slump performance when heating the solder paste after it is printed, if the slump is large, this causes a solder bridge defect to occur in an actual soldering step. Therefore, the smaller slump when heating it is better in the performance thereof.

In the solder paste in which no polyalkyl methacrylate is added to the flux, as shown in FIG. 13, any bridging does not occur down to the gap having 0.9 mm of the printed solder paste.

On the other hand, in the solder paste in which the flux according to the embodiment to which 1 mass% of the polyalkyl methacrylate is added is used, as shown in FIG. 10, any bridging does not occur down to the gap having 0.7 mm of the printed solder paste.

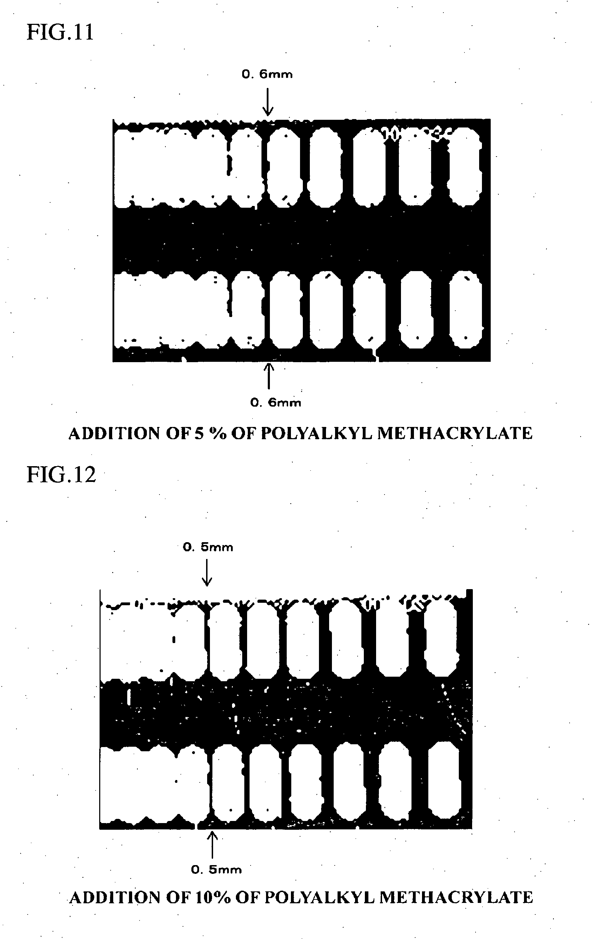

Further, in the solder paste in which the flux according to the embodiment to which 5 mass% of the polyalkyl methacrylate is added is used, as shown in FIG. 11, any bridging does not occur down to the gap having 0.6 mm of the printed solder paste.

Additionally, in the solder paste in which the flux according to the embodiment to which 10 mass% of the polyalkyl methacrylate is added is used, as shown in FIG. 12, any bridging does not occur down to the gap having 0.5 mm of the printed solder paste.

Based on the above results, it is understood that when adding the polyalkyl methacrylate to the flux, an effect of controlling the slump when heating it is obtained and when increasing the addition amount of the polyalkyl methacrylate, the effect of controlling the slump becomes large.

### INDUSTRIAL APPLICABILITY

The flux according to this invention is applicable to a field which searches for a good external appearance after the soldering, in addition to reliability when the solder paste is printed and applied and reliability after the soldering.

## Claims

1. Flux which is mixed with solder powder to produce solder paste, **characterized in that** the flux comprises 0.5-5.0 mass% of polyalkyl methacrylate having an alkyl group, and a thixotropic agent containg hardened castor oil which reduces a thixotropic index of the solder paste and enhances viscosity thereof, thereby preventing the viscosity of the solder paste from varying when stirring the solder paste.

## Patentansprüche

1. Flussmittel, das mit Lotpulver zu einer Lotpaste gemischt wird, **dadurch gekennzeichnet, dass** das Flussmittel 0,5-5,0 Massen-% Polyalkylmethacrylat mit einer Alkylgruppe und gehärtetes Ricinusöl enthaltendes Thixotropiermittel umfasst, welches einen Thixotropieindex der Lotpaste verringert und deren Viskosität erhöht, wodurch verhindert wird, dass die Viskosität der Lotpaste beim Rühren der Lotpaste variiert.

## Revendications

1. Fondant qui est mélangé avec de la poudre à braser pour produire de la pâte à braser, **caractérisé en ce que**
le fondant comprend 0,5-5,0 % en masse de polyméthacrylate d'alkyle ayant un groupe alkyle, et un agent thixotrope contenant de l'huile de ricin durcie, ce qui réduit l'indice thixotrope de la pâte à braser et en améliore la viscosité, empêchant ainsi la viscosité de la pâte à braser de varier lors de l'agitation de la pâte à braser.
